# EUROPEAN PATENT SPECIFICATION

(11) **EP 3 234 330 B1**
(45) Date of publication and mention of the grant of the patent: **06.12.2023**
(21) Application number: 15821243.1
(22) Date of filing: 18.12.2015
(51) Int. Cl.: B23P 15/10, F02F 3/00, F02F 3/22

(54) **PISTON WITH COOLING GALLERY HAVING ENHANCED OIL INLET AND METHOD OF CONSTRUCTION THEREOF**
KOLBEN MIT KÜHLKANAL MIT ERHÖHTEM ÖLEINLASS UND VERFAHREN ZUR KONSTRUKTION DAVON
PISTON À GALERIE DE REFROIDISSEMENT COMPORTANT UNE ENTRÉE D'HUILE AMÉLIORÉE ET PROCÉDÉ DE CONSTRUCTION DE CELUI-CI

(30) Priority: 19.12.2014 US 201462094258 P
(43) Date of publication of application: 25.10.2017
(73) Proprietor: Tenneco Inc., Lake Forest, IL 60045 (US)
(72) Inventor: WEINENGER, Michael, Southfield, MI 48075 (US)
(74) Representative: HGF
(86) International application number: PCT/US2015/066918
(87) International publication number: WO 2016/100936

(56) References cited:
- DE-A1-102011 007 285
- FR-A1- 2 839 116
- GB-A- 916 696
- US-A- 4 180 027

## Description

### BACKGROUND OF THE INVENTION

### 1. Technical Field

This invention relates generally to internal combustion engines, and more particularly to pistons and their method of construction.

### 2. Related Art

Pistons for internal combustion engines are known to include annular cooling galleries to facilitate maintaining the pistons within operable temperature limits. Once oil is delivered into the cooling gallery through an oil inlet, typically located on one side of the piston, it is desirable to have the oil circulate to an opposite side of the piston and exit through an oil outlet, whereupon the oil typically returns to the crankcase. If the oil is allowed to exit the oil inlet, insufficient cooling of the piston can result, thereby potentially diminishing the useful life of the piston.

Some attempts have been made to prevent the exit of oil through the oil inlet. A known mechanism includes the fixation of a separate annular part to the piston, about the oil inlet, to form an upstanding barrier about the oil inlet to inhibit the egress of oil. Although this can prove effective, the need to perform a secondary attachment process to attach the part to the piston, such as via welding, comes with addition part and manufacturing process costs. Another known attempt includes the formation of a barrier in a casting operation, and again, although this can prove effective, it requires the piston part to be cast, which is not always desirable, depending on the piston application as well as the manufacture process of the piston. Further, casting in the barrier requires special molds for each different form of piston being made, and comes with inherent costs.

DE102011007285 A1, US4180027, GB916696 A and FR2839116 A1 all disclose pistons having an annular cooling gallery with inlets and outlets in the floor thereof, which are surrounded by protrusions.

### SUMMARY OF THE INVENTION

In accordance with one aspect of the invention, a piston includes an upper crown having an upper combustion surface with a generally cylindrical upper land, including a ring belt region, depending therefrom and a lower crown depending from the upper crown. The lower crown includes a pair of laterally spaced, axially aligned pin bores configured for receipt of a wrist pin to facilitate coupling the piston to a connecting rod. A substantially closed, annular outer cooling gallery is formed between the upper and lower crowns, wherein a bottom surface of the cooling gallery is formed by a floor of the lower crown. An oil inlet and an oil outlet extend through the floor, wherein the oil inlet is operable to allow oil to flow into the cooling gallery and the oil outlet is operable to allow oil to flow outwardly from the cooling gallery, thereby forming an oil flow circuit. To facilitate forming a one-way flow of oil into the cooling gallery through the oil inlet and outwardly from the cooling gallery through the oil outlet, thereby enhancing the cooling effectiveness of the cooling gallery and the oil flowing therethrough, the oil inlet includes an upstanding toroid-shaped protrusion and the oil outlet has no upstanding protrusion. The upstanding protrusion of the oil inlet extends upwardly from the floor into the cooling gallery, wherein the protrusion is formed as a monolithic extrusion from the material of the lower crown floor. The protrusion inhibits the reverse flow of oil outwardly from the cooling gallery through the oil inlet, and as such, the oil is necessarily circulated, as intended, through the cooling gallery and out the oil outlet.

In accordance with another aspect of the invention, the material of the oil inlet is hardened relative to the remaining material of the floor.

In accordance with another aspect of the invention, the floor has a thickness immediately adjacent the protrusion, and the protrusion has a height between about 1/2 - 3 times the thickness.

In accordance with another aspect of the invention, the protrusion extends from the floor to a free end, wherein the protrusion has a first wall thickness immediately adjacent the floor and a second wall thickness immediately adjacent the free end, wherein the first thickness is greater than the second thickness.

In accordance with another aspect of the invention, the wall thickness of the protrusion decreases continuously from the floor to the free end.

In accordance with another aspect of the invention, a method of constructing a piston for an internal combustion engine is provided. The method includes forming an upper crown having an upper combustion surface with a generally cylindrical upper land, including a ring belt region, depending therefrom and forming a lower crown depending from the upper crown. The method further includes forming the lower crown having a pair of laterally spaced, axially aligned pin bores configured for receipt of a wrist pin to facilitate coupling the piston to a connecting rod. The method further includes forming a substantially closed, annular outer oil gallery between the upper and lower crowns, wherein a bottom surface of the cooling gallery is formed by a floor of the lower crown. Further yet, the method includes forming an oil inlet extending through the floor by simultaneously forming an opening in the floor and displacing material of the floor upwardly from the floor, wherein the displaced material forms an upstanding toroid-shaped protrusion. Further, the method includes forming an oil outlet extending through the floor with no upstanding protrusion. As such, the protrusion acts to inhibit oil from flowing in reverse direction outwardly from the cooling gallery back through the oil inlet. With the protrusion being formed as a result of forming the inlet, significant manufacturing efficiencies are realized, thereby minimizing the cost associated with forming the protrusion.

In accordance with another aspect of the invention, the method can further include forming the upstanding toroid-shaped protrusion in a form drilling process.

In accordance with another aspect of the invention, the method can further include hardening the material of the protrusion while forming the oil inlet.

In accordance with another aspect of the invention, the method can further include forming the protrusion having a height between about 1/2 - 3 times the thickness of the floor immediately adjacent the protrusion.

In accordance with another aspect of the invention, the method can further include forming the protrusion extending from the floor to a free end, and forming the protrusion having a first wall thickness immediately adjacent the floor and a second wall thickness immediately adjacent the free end, and forming the first thickness being greater than the second thickness.

In accordance with another aspect of the invention, the method can further include forming the wall thickness of the protrusion so that it decreases continuously from the floor to the free end.

### BRIEF DESCRIPTION OF THE DRAWINGS

These and other aspects, features and advantages of the invention will become more readily appreciated when considered in connection with the following detailed description of presently preferred embodiments and best mode, appended claims and accompanying drawings, in which:
Figure 1 is a partially sectioned perspective view of a piston constructed in accordance with one aspect of the invention;
Figure 2 is a cross-sectional view taken generally along a pin bore axis of the piston of Figure 1;
Figure 2A is an enlarged, fragmentary cross-sectional view taken through an oil inlet of the piston of Figure 1; and
Figure 3 is a bottom plan view of the piston of Figure 1.

### DETAILED DESCRIPTION OF PRESENTLY PREFERRED EMBODIMENTS

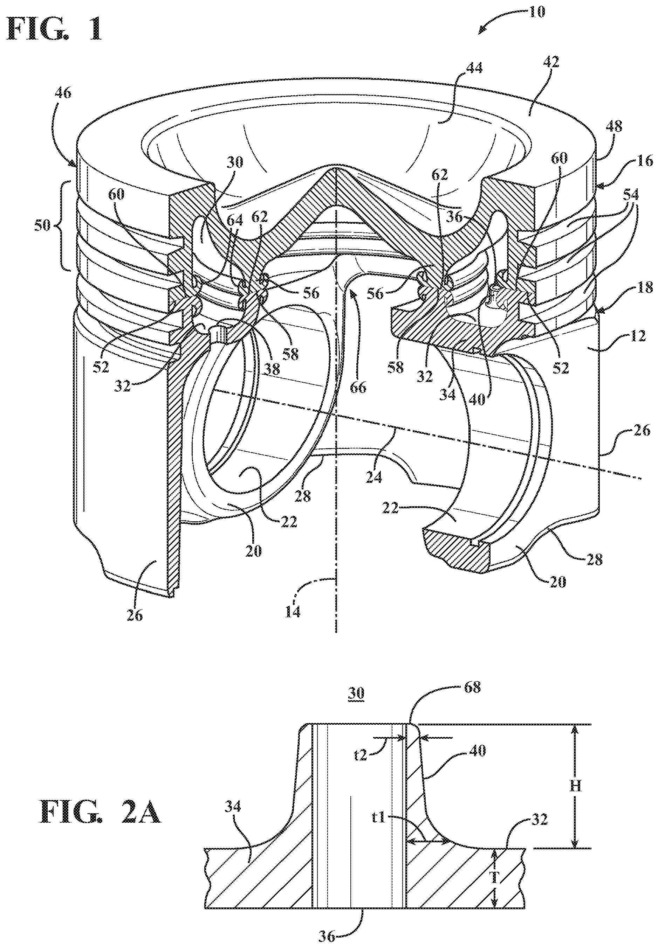

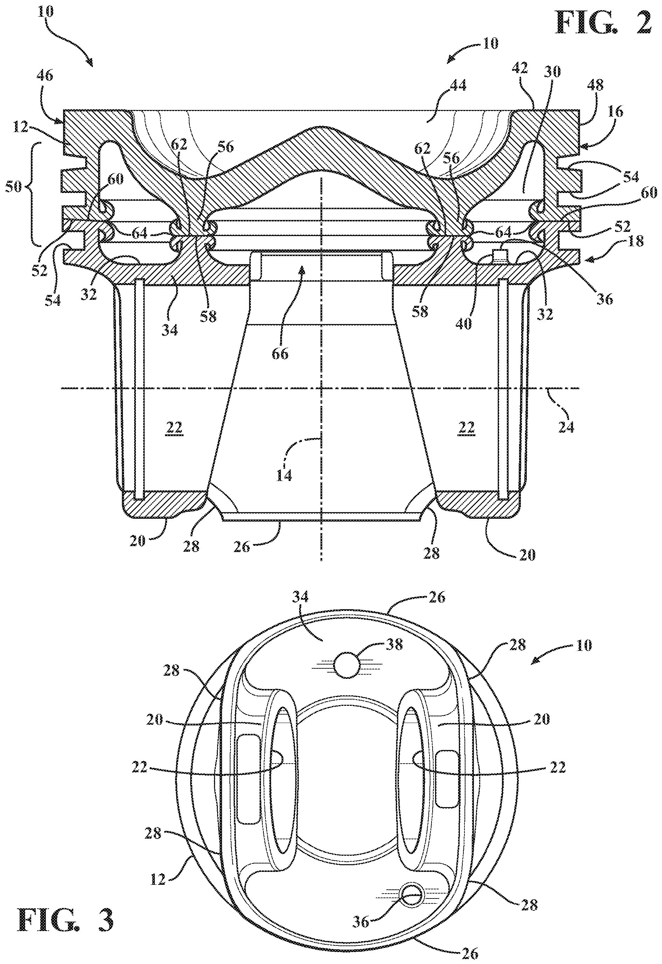

Referring in more detail to the drawings, Figures 1 and 2 illustrate a piston 10 constructed according to one presently preferred embodiment of the invention for reciprocating movement in a cylinder bore or chamber of an internal combustion engine, such as a heavy duty diesel engine, by way of example and without limitation. The piston 10 has a body 12 extending along a central longitudinal axis 14 along which the piston 10 reciprocates in the cylinder bore. The body 12 has an upper crown 16 and a lower crown 18. The lower crown 18 has a pair of pin bosses 20 depending from the upper crown 16 to provide laterally spaced pin bores 22 aligned with one another along a pin bore axis 24 that extends generally transversely to the central longitudinal axis 14. The pin bosses 20 are joined to laterally spaced, diametrically opposite skirt portions 26 via strut portions 28. A substantially closed, annular outer oil cooling gallery 30 is formed between the upper and lower crowns 16, 18, wherein a bottom surface, also referred to as floor 32, of the cooling gallery 30 is formed by a wall 34 of the lower crown 18. An oil inlet 36 and an oil outlet 38 (Figures 1 and 3) extend through the floor 32, wherein the oil inlet 36 is operable to allow oil to flow into the cooling gallery 30 and the oil outlet 38 is operable to allow oil to flow outwardly from the cooling gallery 30. To facilitate a one-way flow of oil into the cooling gallery 30 through the oil inlet 36, the oil inlet 36 includes an upstanding toroid-shaped wall, also referred to as a protrusion 40, that extends upwardly from the floor 32 into the cooling gallery 30, wherein the protrusion 40 is formed as a monolithic, hardened extrusion from the material of lower crown wall 34. With the protrusion 40 extending upwardly from the floor 32, oil is inhibited from flowing in a reverse flow direction back through the inlet 36, and thus, the oil, once having entered the cooling gallery 30 through the inlet 36 is prompted to circulate through the cooling gallery 30, as intended, to a location generally or substantially diametrically opposite the inlet 36, whereupon the oil is caused to flow outwardly from the cooling gallery 30 through the oil outlet 38, given the outlet 38 does not have an upstanding protrusion. As such, the oil flows through the cooling gallery 30 in a one-way flow circuit, thereby promoting optimal cooling of the piston 10 by both causing fresh oil to continuously enter and exit the cooling gallery 30, thereby inhibiting coking of the oil within the cooling gallery 30, while also assuring the oil flows throughout the entirety of the cooling gallery 30 prior to exiting, thereby promoting uniform cooling of the piston 10.

The upper crown 16 of the piston 10 is represented here as having an upper combustion surface 42 with a combustion bowl 44 recessed therein to provide a desired gas flow within the cylinder bore. A generally cylindrical outer wall 46, including an upper land 48 and a ring belt 50, extends downwardly from the upper combustion surface 42 to an annular outer free end 52, with at least one annular ring groove 54 being formed in the ring belt 50 for floating receipt of a piston ring (not shown). An annular inner rib 56 depends from an undercrown surface of the combustion bowl 44 to an inner free end 58.

The lower crown 18 can be constructed separately from the upper crown 16, such as in a forging process, by way of example and without limitation, and can then be joined to the upper crown 16 via an upstanding annular outer rib free end 60 and an upstanding annular inner rib free end 62. The upper and lower crowns 16, 18 are represented here as being joined together by a friction weld, induction weld or any other suitable type of weld joint 64 formed across the respective outer free ends 52, 60 and inner free ends 58, 62, for example. As such, the substantially closed, annular outer oil gallery 30 is formed between the upper and lower crowns 16, 18, while an open inner gallery 66 is formed upwardly of the pin bores 22 beneath a central portion of the combustion bowl 44. It should be recognized that the piston 10, constructed in accordance with the invention, could have upper and lower crown portions formed otherwise, including being formed as a single, monolithic piece of material and having different configurations of oil galleries, for example.

The oil inlet 36 and protrusion 40 are formed in a form drilling process, also referred to as flow or friction drilling, and can be formed in the lower crown 18 at any stage of piston manufacture, even after the upper crown 16 and lower crown 18 have been joined to one another, if formed as separate parts. This is made possible as a result of the protrusion 40 being formed simultaneously in the form drilling process used to form the opening of the oil inlet 36. Flexibility is provided in the manufacture of the piston 10, which in turn can result in cost savings, aside from the reduction in manufacture processes needed to construct the protrusion 40. The floor 32 has a thickness (T) immediately adjacent the protrusion 40 and the protrusion 40 is formed having a height (H) between about 1/2 - 3 times the thickness T, and preferably about or greater than 1 times the thickness T. The tubular protrusion 40 extends upwardly from the floor 32 to a free end 68. The protrusion 40 has a first wall thickness (t1) immediately adjacent the floor 32 and a second wall thickness (t2) immediately adjacent the free end 68, with the first thickness (t1) being greater than the second thickness (t2). The wall thickness of the protrusion 40 decreases continuously or substantially continuously from thickness t1 adjacent the floor 32 to the free end 68. The configuration and increased hardness of the protrusion 40, relative to the hardness of the floor 32, is a direct result of the drill forming process, which in turn provide the protrusion 40 with its enhanced strength and configuration benefits.

Obviously, many modifications and variations of the present invention are possible in light of the above teachings. It is, therefore, to be understood that within the scope of the appended claims, the invention may be practiced otherwise than as specifically described.

## Claims

1. A piston (10) for an internal combustion engine, comprising:
an upper crown (16) having an upper combustion surface (42) with a combustion bowl (44) recessed therein and a generally cylindrical upper land (48), including a ring belt region (50), depending therefrom;
a lower crown (18) depending from the upper crown (26), the lower crown (18) including a pair of laterally spaced, axially aligned pin bores (22) configured for receipt of a wrist pin;
an annular outer oil gallery (30) formed between the upper and lower crowns (16, 18), said gallery (30) having a bottom surface formed by a floor (32) of the lower crown (18);
an open inner gallery (66) formed upwardly of said pin bores (22) beneath a central portion of said combustion bowl (44);
an oil inlet (36) extending through said floor (32) and including an upstanding toroid-shaped protrusion (40) that extends upwardly from said floor (32) into the annular outer oil gallery (30), wherein said protrusion (40) is formed as a monolithic extrusion from the material of said floor (32); and
an oil outlet (38) extending through and being flush with said floor (32),
**characterized in that** said annular outer oil gallery (30) is closed to said open inner gallery (66) such that direct fluid communication therebetween is inhibited.

2. The piston of claim 1 wherein the material of said oil inlet (36) is hardened relative to the remaining material of said floor (32).

3. The piston of claim 1 wherein said floor (32) has a thickness immediately adjacent said protrusion (40), said protrusion having a height between about 1/2 - 3 times said thickness.

4. The piston of claim 1 wherein said protrusion (40) extends from said floor (32) to a free end (68), said protrusion (40) having a first wall thickness (t1) immediately adjacent said floor (32) and a second wall thickness (t2) immediately adjacent said free end (68), said first thickness (t1) being greater than said second thickness (t2).

5. The piston of claim 4 wherein said wall thickness decreases continuously from said floor (32) to said free end (58).

6. A method of constructing a piston (10) for an internal combustion engine, comprising:
forming an upper crown (16) having an upper combustion surface (42) with a combustion bowl (44) recessed therein and a generally cylindrical upper land (48), including a ring belt region (50), depending therefrom;
forming a lower crown (18) depending from the upper crown (16) with the lower crown (18) having a pair of laterally spaced pin bosses (20) with axially aligned pin bores (22);
forming an annular outer oil gallery (30) between the upper and lower crowns (16, 18), wherein a bottom surface of the cooling gallery (30) is formed by a floor (32) of the lower crown (18), and an open inner gallery (66) upwardly of said pin bores (22) beneath a central portion of said combustion bowl (44), wherein said annular outer oil gallery (30) is closed to said open inner gallery (66) such that direct fluid communication therebetween is inhibited;
forming an oil inlet (36) through the floor (32) to simultaneously form an opening and displace material of the floor (32) upwardly from the floor (32), wherein the displaced material forms an upstanding toroid-shaped protrusion (40); and
forming an oil outlet (38) through the floor (32) to form a further opening flush with said floor (32).

7. The method of claim 6 further including hardening the material of the protrusion (40) while forming the oil inlet (36).

8. The method of claim 6 further including forming the protrusion (40) having a height between about 1/2 - 3 times the thickness of the floor (32) immediately adjacent the protrusion (40).

9. The method of claim 6 further including forming the protrusion (40) extending from the floor (32) to a free end (68), and forming the protrusion (40) having a first wall thickness (t1) immediately adjacent the floor (32) and a second wall thickness (t2) immediately adjacent the free end (68), and forming the first thickness (t1) being greater than the second thickness (t2).

10. The method of claim 9 further including forming the wall thickness so that it decreases continuously from the floor (32) to the free end (68).

11. The method of claim 6 further forming the protrusion (40) in a from drilling process.

## Patentansprüche

1. Kolben (10) für einen Verbrennungsmotor, umfassend:
eine obere Krone (16), die eine obere Verbrennungsfläche (42) mit einer darin eingelassenen Verbrennungsmulde (44) und einen davon herabhängenden im Allgemeinen zylindrischen oberen Steg (48) aufweist, der eine Ringgürtelregion (50) beinhaltet;
eine untere Krone (18), die von der oberen Krone (26) herabhängt, wobei die untere Krone (18) ein Paar seitlich beabstandeter, axial ausgerichteter Stiftbohrungen (22) beinhaltet, die zur Aufnahme eines Gelenkstifts konfiguriert sind;
einen ringförmigen äußeren Ölkanal (30), der zwischen der oberen und unteren Krone (16, 18) gebildet ist, wobei der Kanal (30) eine untere Fläche aufweist, die durch einen Boden (32) der unteren Krone (18) gebildet ist;
einen offenen inneren Kanal (66), der oberhalb der Stiftbohrungen (22) unterhalb eines zentralen Abschnitts der Verbrennungsmulde (44) gebildet ist;
einen Öleinlass (36), der sich durch den Boden (32) erstreckt und einen aufrechten toroidförmigen Vorsprung (40) beinhaltet, der sich von dem Boden (32) nach oben in den ringförmigen äußeren Ölkanal (30) erstreckt, wobei der Vorsprung (40) als monolithische Extrusion aus dem Material des Bodens (32) gebildet ist; und
einen Ölauslass (38), der sich durch den Boden (32) erstreckt und mit diesem bündig ist,
**dadurch gekennzeichnet, dass** der ringförmige äußere Ölkanal (30) gegenüber dem offenen inneren Kanal (66) geschlossen ist, sodass eine direkte Fluidverbindung dazwischen verhindert wird.

2. Kolben nach Anspruch 1, wobei das Material des Öleinlasses (36) im Vergleich zu dem übrigen Material des Bodens (32) gehärtet ist.

3. Kolben nach Anspruch 1, wobei der Boden (32) unmittelbar angrenzend an den Vorsprung (40) eine Dicke aufweist, wobei der Vorsprung eine Höhe zwischen etwa des 1/2-3-fachen der Dicke aufweist.

4. Kolben nach Anspruch 1, wobei sich der Vorsprung (40) von dem Boden (32) zu einem freien Ende (68) erstreckt, wobei der Vorsprung (40) eine erste Wanddicke (t1) unmittelbar angrenzend an den Boden (32) und eine zweite Wanddicke (t2) unmittelbar angrenzend an das freie Ende (68) aufweist, wobei die erste Dicke (t1) größer als die zweite Dicke (t2) ist.

5. Kolben nach Anspruch 4, wobei die Wanddicke von dem Boden (32) zu dem freien Ende (58) kontinuierlich abnimmt.

6. Verfahren zum Konstruieren eines Kolbens (10) für einen Verbrennungsmotor, umfassend:
Bilden einer oberen Krone (16), die eine obere Verbrennungsfläche (42) mit einer darin eingelassenen Verbrennungsmulde (44) und einen davon herabhängenden im Allgemeinen zylindrischen oberen Steg (48) aufweist, der eine Ringgürtelregion (50) beinhaltet;
Bilden einer unteren Krone (18), die von der oberen Krone (16) herabhängt, wobei die untere Krone (18) ein Paar seitlich beabstandeter Bolzennaben (20) mit axial ausgerichteten Stiftbohrungen (22) aufweist;
Bilden eines ringförmigen äußeren Ölkanals (30) zwischen der oberen und unteren Krone (16, 18), wobei eine untere Fläche des Kühlkanals (30) durch einen Boden (32) der unteren Krone (18) gebildet ist, und eines offenen inneren Kanals (66) oberhalb der Stiftbohrungen (22) unterhalb eines zentralen Abschnitts der Verbrennungsmulde (44), wobei der ringförmige äußere Ölkanal (30) gegenüber dem offenen inneren Kanal (66) geschlossen ist, sodass eine direkte Fluidverbindung dazwischen verhindert wird;
Bilden eines Öleinlasses (36) durch den Boden (32), um gleichzeitig eine Öffnung zu bilden und Material des Bodens (32) von dem Boden (32) nach oben zu verdrängen, wobei das verdrängte Material einen aufrechten toroidförmigen Vorsprung (40) bildet; und
Bilden eines Ölauslasses (38) durch den Boden (32), um eine weitere Öffnung bündig mit dem Boden (32) zu bilden.

7. Verfahren nach Anspruch 6, ferner beinhaltend Härten des Materials des Vorsprungs (40) während der Bildung des Öleinlasses (36).

8. Verfahren nach Anspruch 6, ferner beinhaltend Bilden des Vorsprungs (40), der eine Höhe zwischen etwa des 1/2-3-fachen der Dicke des Bodens (32) aufweist, unmittelbar angrenzend an den Vorsprung (40).

9. Verfahren nach Anspruch 6, ferner beinhaltend Bilden des Vorsprungs (40), der sich von dem Boden (32) zu einem freien Ende (68) erstreckt, und Bilden des Vorsprungs (40), der eine erste Wanddicke (t1) unmittelbar angrenzend an den Boden (32) und eine zweite Wanddicke (t2) unmittelbar angrenzend an das freie Ende (68) aufweist, und Bilden der ersten Dicke (t1), die größer als die zweite Dicke (t2) ist.

10. Verfahren nach Anspruch 9, ferner beinhaltend Bilden der Wanddicke, sodass sie von dem Boden (32) zu dem freien Ende (68) kontinuierlich abnimmt.

11. Verfahren nach Anspruch 6, ferner Bilden des Vorsprungs (40) in einem Formbohrprozess.

## Revendications

1. Piston (10) pour un moteur à combustion interne, comprenant :
une couronne supérieure (16) ayant une surface de combustion supérieure (42) avec un bol de combustion (44) encastré à l'intérieur de celle-ci et une zone supérieure globalement cylindrique (48), comprenant une région de ceinture annulaire (50), dépendant de celle-ci ;
une couronne inférieure (18) dépendant de la couronne supérieure (26), la couronne inférieure (18) comprenant une paire d'alésages de broche latéralement espacés et alignés axialement (22) configurés pour recevoir une broche d'axe ;
une galerie d'huile externe annulaire (30) formée entre les couronnes supérieure et inférieure (16, 18), ladite galerie (30) ayant une surface inférieure formée par un fond (32) de la couronne inférieure (18) ;
une galerie interne ouverte (66) formée vers le haut desdits alésages de broches (22) au-dessous d'une partie centrale dudit bol de combustion (44) ;
une entrée d'huile (36) s'étendant à travers ledit fond (32) et comprenant une saillie verticale de forme toroïdale (40) qui s'étend vers le haut depuis ledit fond (32) dans la galerie d'huile externe annulaire (30), dans lequel ladite saillie (40) est formée comme une extrusion monolithique à partir du matériau dudit plancher (32) ; et
une sortie d'huile (38) s'étendant à travers et affleurant ledit fond (32),
**caractérisé en ce que** ladite galerie d'huile externe annulaire (30) est fermée à ladite galerie interne ouverte (66) de telle sorte qu'une communication fluidique directe entre elles soit inhibée.

2. Piston selon la revendication 1, dans lequel le matériau de ladite entrée d'huile (36) est durci par rapport au matériau restant dudit fond (32).

3. Piston selon la revendication 1, dans lequel ledit fond (32) a une épaisseur immédiatement adjacente à ladite saillie (40), ladite saillie ayant une hauteur comprise entre environ 1/2 et 3 fois ladite épaisseur.

4. Piston selon la revendication 1, dans lequel ladite saillie (40) s'étend depuis ledit fond (32) jusqu'à une extrémité libre (68), ladite saillie (40) ayant une première épaisseur de paroi (11) immédiatement adjacente audit fond (32) et une seconde épaisseur de paroi (t2) immédiatement adjacente à ladite extrémité libre (68), ladite première épaisseur (11) étant supérieure à ladite deuxième épaisseur (t2).

5. Piston selon la revendication 4, dans lequel ladite épaisseur de paroi diminue en continu depuis ledit fond (32) jusqu'à ladite extrémité libre (58).

6. Procédé de construction d'un piston (10) pour un moteur à combustion interne, comprenant :
la formation d'une couronne supérieure (16) ayant une surface de combustion supérieure (42) avec un bol de combustion (44) encastré à l'intérieur de celle-ci et une zone supérieure globalement cylindrique (48), comprenant une région de ceinture annulaire (50), dépendant de celle-ci ;
la formation d'une couronne inférieure (18) dépendant de la couronne supérieure (16), avec la couronne inférieure (18) ayant une paire de bossages de broches latéralement espacés (20) avec des alésages de broches alignés axialement (22) ;
la formation d'une galerie d'huile externe annulaire (30) entre les couronnes supérieure et inférieure (16, 18), dans lequel une surface inférieure de la galerie de refroidissement (30) est formée par un fond (32) de la couronne inférieure (18), et une galerie interne ouverte (66) vers le haut desdits alésages de broches (22) au-dessous d'une partie centrale dudit bol de combustion (44), dans lequel ladite galerie d'huile externe annulaire (30) est fermée à ladite galerie interne ouverte (66) de telle sorte qu'une communication fluidique directe entre elles soit inhibée ;
la formation d'une entrée d'huile (36) à travers le fond (32) pour former simultanément une ouverture et déplacer le matériau du fond (32) vers le haut depuis le fond (32), dans lequel le matériau déplacé forme une saillie verticale de forme toroïdale (40) ; et
la formation d'une sortie d'huile (38) à travers le fond (32) pour former une autre ouverture affleurante audit fond (32).

7. Procédé selon la revendication 6, comprenant en outre le durcissement du matériau de la saillie (40) tout en formant l'entrée d'huile (36).

8. Procédé selon la revendication 6, comprenant en outre la formation de la saillie (40) ayant une hauteur comprise entre environ 1/2 et 3 fois l'épaisseur du sol (32) immédiatement adjacent à la saillie (40).

9. Procédé selon la revendication 6, comprenant en outre la formation de la saillie (40) s'étendant du fond (32) jusqu'à une extrémité libre (68), et la formation de la saillie (40) ayant une première épaisseur de paroi (11) immédiatement adjacente au fond (32) et une seconde épaisseur de paroi (t2) immédiatement adjacente à l'extrémité libre (68), et formant la première épaisseur (11) étant supérieure à la seconde épaisseur (t2).

10. Procédé selon la revendication 9, comprenant en outre la formation de l'épaisseur de paroi de telle sorte qu'elle diminue en continu depuis le fond (32) jusqu'à l'extrémité libre (68).

11. Procédé selon la revendication 6, formant en outre la saillie (40) lors d'un processus de perçage.
